# EUROPEAN PATENT SPECIFICATION

(11) **EP 3 303 543 B1**
(45) Date of publication and mention of the grant of the patent: **18.09.2019**
(21) Application number: 16731661.1
(22) Date of filing: 27.05.2016
(51) Int. Cl.: A23L 2/74, C12G 3/08, C12H 1/07, C12H 3/04

(54) **METHOD FOR EXTRACTING UNWANTED VERY WEAK ACIDIC COMPOUNDS FROM A DRINKABLE LIQUID, IN PARTICULAR FROM A WINE**
VERFAHREN ZUR EXTRAKTION VON UNERWÜNSCHTEN, SEHR SCHWACHEN SÄUREVERBINDUNGEN AUS EINER TRINKBAREN FLÜSSIGKEIT, INSBESONDERE AUS EINEM WEIN
PROCÉDÉ POUR EXTRAIRE DES COMPOSÉS NON SOUHAITÉS, TRÈS FAIBLEMENT ACIDES D'UN LIQUIDE BUVABLE, EN PARTICULIER D'UN VIN

(30) Priority: 28.05.2015 PT 2015108513
(43) Date of publication of application: 11.04.2018
(73) Proprietor: Ferreira Cameira dos Santos, Paulo Jorge, 2775-809 Carcavelos (PT); Lopes Lima Barros, Maria Teresa, 2775-809 Carcavelos (PT)
(72) Inventor: GERALDES FERNANDES, Vítor Manuel, 1800-142 Lisboa (PT); DE BRITO ESTRELA, Rui, 1500-714 Lisboa (PT); Ferreira Cameira dos Santos, Paulo Jorge, 2775-809 Carcavelos (PT)
(74) Representative: Ferreira, Maria Silvina
(86) International application number: PCT/IB2016/053133
(87) International publication number: WO 2016/189508

(56) References cited:
- PT-A- 105 008
- US-A1- 2014 127 366
- P UGARTE: "Reduction of 4-Ethylphenol and 4-Ethylguaiacol Concentration in Red Wines Using Reverse Osmosis and Adsorption", AMERICAN JOURNAL OF ENOLOGY AND VITICULTURE, vol. 56, no. 1, 1 January 2005 (2005-01-01), pages 30-36, XP055294950, cited in the application
- MASSOT A ET AL: "Nanofiltration and reverse osmosis in winemaking", DESALINATION, ELSEVIER, AMSTERDAM, NL, vol. 231, no. 1-3, 31 October 2008 (2008-10-31), pages 283-289, XP023979182, ISSN: 0011-9164, DOI: 10.1016/J.DESAL.2007.10.032 [retrieved on 2008-08-20]
- ZHANG S T ET AL: "Kinetic study of electrodialysis of acetic acid and phosphate in fermentation broth", JOURNAL OF FERMENTATION AND BIOENGINEERING, SOCIETY OF FERMENTATION TECHNOLOGY, JP, vol. 77, no. 3, 1 January 1994 (1994-01-01), pages 288-292, XP025737295, ISSN: 0922-338X, DOI: 10.1016/0922-338X(94)90236-4 [retrieved on 1994-01-01]

## Description

### Technical Field

The present application regards an efficient method, process and apparatus to remove unwanted compounds from wine or other beverage. The present application is intended to be advantageously employed in the field of alcoholic and non-alcoholic beverages for removing one or more unwanted small very weak acidic compounds with low molecular weight, which are present in unwanted concentrations in a beverage. In particular, the present application is intended to be employed in the winemaking field in order to reduce the concentration of two small very weak acidic compounds, namely 4-ethylphenol and 4-ethylguaiacol, which confer Brett character to the wine, in order to improve the organoleptic characteristics of the latter. The present invention application is also intended to reduce the concentration of very weak acidic compounds that confer off-flavours to wine spirits, non-alcoholic wines or dealcoholized wines.

### Background

The aroma of a wine, as well known, has an important role in the wine's quality and value. Wine aroma arises from the volatile constituents that are present in grapes, but also from constituents that are produced in biochemical transformations during vinification and aging (Bayonove et al., 2000). Some aroma compounds have a positive effect on the quality of the wine, whereas others, above specific threshold concentrations, are harmful for the global aroma quality. Harmful effects of certain aroma constituents act in two different ways: bad odour associated with the molecule itself, and the ability of the molecule to mask pleasant, positive notes. Molecules like 4-ethylphenol (4-EP) and 4-ethylguaiacol (4-EG), belongs to this latter category, and have been described as smelling like leather, barn, horse sweat, soot, ink, and gouache (Gerbaux and Vincent, 2001). Wine spoilage by *Brettanomyces*/*Dekkera* yeasts, which synthesize the above mentioned off-flavour metabolites, is the cause of constant concern and economics losses worldwide (Couto et al. 2005). The aromatic default of wines caused by 4-EP and/or 4-EG, is also called "Brett character".

A very complete study of wines made by French researchers, from different producers and regions, found a wide range of concentrations of 4-EP and 4-EG in red wines typically exhibiting high levels of ethylphenols and lower levels of their precursors which are vinylphenols (Chatonnet et al. 1992). *Brettanomyces*/*Dekkera* is not the only yeast able to synthesize ethylphenols, but it is the only one able to produce 4-EP and 4-EG in the quantities necessary to release the telltale odours in red wines (Chatonnet et al. 1992). The yeasts of the genus *Brettanomyces*/*Dekkera* becomes active after fermentation, although authors don't know what factors can trigger the rapid synthesis of 4-EP. Sensory panels have observed poorer aromatic, gustatory, and global quality in most varieties of grapes for wines when descriptors associated with ethylphenols increase (Gerbaux and Vincent 2001). In the other hand, some oenologists suggest that moderate concentrations of the negative-associated aromas, 4-EP and 4-EG, add complexity to the best wines. Nevertheless, while it's easy to inoculate a wine with *Brettanomyces*/*Dekkera* yeasts, it is much more difficult to regulate the levels of the ethylphenols produced. These findings suggest that each wine has a "sweet spot" of Brett character, which can be defined as the ideal concentration of 4-EP and 4-EG that, along with the other olfactory notes of the wine, that confers to it an improved complex bouquet.

In a high number of cases, high concentrations of 4-EP and 4-EG in wines cause substantial economic losses for wine producers. Moreover, as *Brettanomyces*/*Dekkera is* most frequently found in cooperage, the more expensive the wine, the more prone it is to contamination. Higher priced wines are stored in barrel before bottling, and some of the most expensive wines are not filtered at all.

After a number of attempts to improve characteristics of spoiled wines using tangential-flow filtration membrane processes, Smith (1994) proposed a technique for the selective removal of low molecular weight compounds from wine, although some drawbacks are detected in this method. This author proposed a batch process designed to remove compounds from a solution. According to this author, it can be used to remove from wine low molecular weight compounds, namely: "ethyl acetate, acetaldehyde, acetic acid, H₂S, ethylmercaptan, dimethylsulphide and CO₂" (Smith, 1994). It consists of an integrated process involving reverse osmosis and adsorption of the undesirable molecules, using a specific resin.

However, these methods which involves adsorption/absorption media (resin, activated carbon, PVPP, etc.), have a serious side-effect, which is the lack of specificity of the adsorption or absorption phenomena. The drawbacks of the method proposed by Smith (1994) have been fully demonstrated by Ugarte et al. (2005), in a study using different red wines with high concentrations of 4-EP and 4- EG. These authors used the method proposed by Smith (1994), consisting of a first step of reverse osmosis in order to obtain a wine concentrate and a reverse osmosis permeate, this latter containing the undesirable compounds, 4-EP and 4-EG. Then, the reverse osmosis permeate is poured in a column filled with an adsorbent, which was the Amberlite XAD-16 HP resin (Rohm & Haas, São Paulo, Brazil) (Bes et al., 2001), to obtain a permeate without the undesirable compounds, and finally they proceed to the reconstitution of the wine, by mixing the "purified" reverse osmosis permeate with the wine concentrate to reconstitute the original wine tested. This procedure was relatively successful in removing 4-EP and 4-EG, but the process also removed important aroma compounds from the wines.

The lack of specificity of the process proposed by Smith (1994) was highlighted by the experiments carried out by Ugarte et al. (2005), because it was clear for these authors that the process absorbs indiscriminately all the aromatic molecules present in the wine, no matter they have a good or bad contribution to wine aroma. In fact, Ugarte et al. (2005) showed that the process not only lowered the concentrations of 4-EP and 4-EG but also partially adsorbed a series of herbaceous and "green"-associated C6 alcohols and "sweat" and rancid-smelling hexanoic, octanoic, and decanoic acids. In conclusion, not every compound removed by the process was undesirable. For example, after three hours of resin contact, half of the methyl and ethyl vanillate was also removed. The process also eliminated high proportions of a number of other esters. Nevertheless, the loss of isoamyl acetate, ethyl hexanoate and octanoate, diethyl succinate, and 2-phenylethyl acetate was far less significant in red wine than it would be in white wine. These esters convey typically fruity aromas that are normally associated with wines such as Chardonnay.

In conclusion, we can say that it's crucial for wineries and winemakers to have a reliable and specific method to remove taint resulting from contamination with *Brettanomyces*/*Dekkera* yeasts. In special, for red wines whose sensory properties are seriously spoiled by high concentrations of 4-EP and 4-EG, the methods currently available are not effective methods of rescuing wines. Other traditional deodorization methods that add adsorbents, such as activated charcoal and bentonite, directly to the wine tank, followed by filtration, also alter the product significantly. As will be shown, the processes described in this application can improve the quality of aroma-defective wines, brandy, spirits and dealcoholized wine more selectively than the above-mentioned process first described by Smith (1994), and studied by Ugarte et al., (2005). We will show that it is possible to combine in an innovative manner the processes of nanofiltration and electrodialysis to remove 4-EP and 4-EG, besides other off flavour compounds with chemical properties similar to the ones of 4-EP and 4-EG.

The process that combines nanofiltration (NF) with electrodialysis (ED) has been used to remove unwanted acidic compounds from wines or other drinkable liquids (Cameira-dos-Santos and Geraldes-Fernandes, 2013). The drinkable liquid is first processed by NF to produce a permeate stream that is subsequently processed by ED; the whole process can run in batch, feed-and-bleed, semi-continuous, or continuous modes of operation. While this process can remove any organic acid from the wine, it was developed with the main objective of removing acetic acid. To accelerate the removal of acetic acid, the pH may be adjusted to a value comprised between 4 and 8, and preferably to a value close to 5. The same process can remove also the ethyl acetate after it has been converted to acetic acid and ethanol by alkaline hydrolysis. This ester hydrolysis reaction requires a pH above 12 to complete within a practical reaction time. At a pH of 11, for instance, the reaction time to hydrolyze 80% of ethyl acetate is already of about 5 hours (Laidler and Chen, 1958). We have found that it is possible to improve the classic NF/ED process and apparatus to remove other important off-flavour of the wines, besides weak acids or ethyl acetate. The improvement that we propose for the classical NF/ED process brings important advantages over the method proposed by Smith (1994) and Ugarte et al. (2005) to remove 4-EP and 4-EG, and furthermore, can remove additional unwanted compounds from wines or other beverages.

Document PT105008 discloses a process for reducing the amount of acids in beverages such as wine, comprising the sequential steps of (i) reverse osmosis yielding a retentate and a permeate at ambient temperature, (ii) neutralisation of the acids by addition of an alkaline compound which raises the pH and the conductivity level of the permeate, (iii) electrodialysis employing an anionic and a cationic membrane , (iv) mixture of the retentate of step (i) and the electrodialysed permeate of step (iii) to yield a wine reduced in acidic compounds. Preferably, step (i) comprises nanofiltration (NF); the beverage is a wine containing alcohol or alcohol-free wine; the process is operated batchwise. In the working example, the pH of the nanofiltration permeate is increased to 6.3 by addition of KOH. The present technology differs from this document since it adjusts the pH of a permeate obtained by nanofiltration of the beverage, between 9 and 12.5.

Document US20140127366 A1 discloses a process for extracting unwanted acidic compounds from a drinkable liquid, and in particular from a wine by electrodialysis. The present technology differs from this document since it adjusts the pH of a permeate obtained by nanofiltration of the beverage, between 9 and 12.5. Said permeate will then be subjected to electrodialysis.

### Summary

The present application discloses a method to remove unwanted very weak acidic compounds, which include in particular 4-ethylphenol and 4-ethylguaiacol, from a beverage, wherein the beverage is first processed by nanofiltration to obtain a raw nanofiltration permeate and a beverage concentrate, then the nanofiltration permeate is processed by electrodialysis to obtain a purified nanofiltration permeate, and finally the purified nanofiltration permeate is mixed with the beverage concentrate to obtain the treated beverage, comprising: adjusting the pH of the nanofiltration permeate to a value higher than 10.5 by the addition of a food grade alkaline substance and running the electrodialysis until the conductivity at 25°C of the permeate is preferentially lower than 100 microsiemen/cm.

In one embodiment, the pH of the nanofiltration permeate is adjusted between 10.5 and 12.5.

In another embodiment, the addition of food grade alkaline substance to the nanofiltration permeate is performed by keeping the pH of the nanofiltration permeate constant during sufficient time to remove the unwanted very weak acidic compounds.

In a further embodiment, the addition of food grade alkaline substance to the nanofiltration permeate is done just before the electrodialysis stack, to keep the nanofiltration permeate in more mild alkaline conditions.

In one embodiment, the electrodialysis process has two stages, wherein the first electrodialysis stage recovers organic acids and other ions of the raw nanofiltration permeate and transfers them to the purified nanofiltration permeate that was produced in the second stage and that circulates on the concentrate compartment of the first electrodialysis stage; wherein the second electrodialysis stage is operated according to the pH defined above.

In another embodiment, the adjustment of the pH of the permeate is performed by anionic bipolar electrodialysis, without the addition of any substance or additive to the permeate.

In one embodiment the beverage is wine.

In another embodiment the beverage is dealcoholized wine.

In a further embodiment, the method is performed in batch mode using a beverage feed tank; the nanofiltration apparatus receives the beverage from the intermediate region of the beverage feed tank and the concentrated beverage is recirculated to the bottom of the beverage tank; the purified permeate processed by electrodialysis is recirculated to the top of the beverage feed tank using a diffuser 170 to reduce the discharging velocity and turbulence of the purified nanofiltration permeate, to prevent the mixing of the purified nanofiltration permeate with the concentrated beverage in the feed tank.

### General Description

We found that if the pH of the NF permeate is higher than 9, the same process that combines nanofiltration and electrodialysis to remove volatile acidity from wine (Cameira dos Santos and Geraldes-Fernandes, 2013), can remove also 4-EP and 4-EG, using a nanofiltration membrane that permeates 4-EP and 4-EG. The first experiments, in batch operation mode, with red wine, with volumes between 500 L and 1000 L, showed that a nanofiltration membrane with a nominal cut-off between 150 and 300 g/mol produced a permeate with Brett off-flavour.
When we increased the pH of the permeate to 12 +/- 0.2, the Brett off-flavour vanished after reducing the conductivity at 25°C, to value lower than 100 microsimens/cm by electrodialysis. Mixing the purified permeate with the concentrated wine, produced a treated wine that had substantially less Brett off-flavour. Further experiments shown than the process worked as well with nanofiltration membranes with a nominal cut-off between 100 and 150.

With further experiments we could observe that the organoleptic properties of the wine could be improved by adjusting the pH of the permeate to the range between 9 and 11, which are mild alkaline conditions that tend to preserve aroma compounds. However, to remove the Brett off-flavour, it was necessary to maintain the mild alkaline conditions during some time, because the pH's of the NF permeate tended to decrease rapidly during the ED process.

Later, we confirmed that a good mode of operation to remove the Brett off-flavour was to adjust the pH of the permeate to 12 immediately before the electrodialysis. As the pH of NF permeate that is processed by ED decreases substantially from the inlet to the outlet of the ED stack, the pH in the feed tank is always in mild alkaline conditions that are less aggressive to the aroma compounds. Hence, preferentially, the pH of the permeate should be adjusted immediately before the electrodialysis, to ensure that the NF permeate is always in mild alkaline conditions most of the time, in the tank that contains the NF permeate. Herein, this NF/ED improved process is called: mild alkaline NF/ED process.
One negative impact of the ED process is that it removes organic acids that are important components of the wine. With NF membranes with a cut-off between 100 and 300, or higher, there is always a substantial fraction of natural acids of the wine in the permeate, which is then lost during the ED process. We have found that these acids can be added back to the wine if the electrodialysis is performed with two stages in series. The first stage removes the acids and transfers them to the stream that flows in the concentrate side of the ED stack; this stream is the purified permeate that comes back from the second ED stage. The second stage then processes the NF permeate that comes from the first ED stage, after adjusting the pH to mild alkaline conditions. Using two ED stages, the treated permeate of the second stage is then used as the solution that receives the acids in the first stage, as mentioned before. Introducing a second ED stage thus enables to recover acidic compounds that we want to keep in the wine. Herein, this NF/ED improved process with two ED stages is called: mild alkaline NF/ED process with two ED stages.

We confirmed also, with a different set of experiments, that the mild alkaline NF/ED process improves the organoleptic properties of dealcoholized wine that has vegetal off-flavours. We don't know yet what compounds are involved in the off-flavours, but we can make an educated guess that these compounds should have chemical properties similar to the 4-EP and 4-EG, with a pKa also between 9 and 12. The compounds 4-EP and 4-EG have a pKa around 10 and become ionized in mild alkaline conditions, which facilitates their removal by the ED process. In mild alkaline conditions and if the ED process runs for sufficient time, the ED process is indeed capable of removing 4-EP and 4-EG, despite of the fact that the typical concentrations of these two compounds are very low and of the order of one microgram per litre.

The yet unknown off-flavour compounds that exist in dealcoholized wine can, probably, be sulphur containing volatile compounds, with a pKa between 9 and 12, as they are mentioned in literature to exist in wine (Shaw et al., 1980; Anness and Bamford, 1982; De Mora et al., 1986; Etievant, 1991; Jensen et al., 2002; Segurel et al., 2004).

By analogy, it seems plausible also that the ED in mild alkaline conditions should remove weak acidic compounds with low molecular weight that cause wine off-flavours. For instance, the mild alkaline ED process must be capable too of removing 4-vinylphenol, with a pKa of 9.56, and 4-vinylguaiacol, with a pKa of 10.03, which confer phenolic off-flavours concentrations to wine in concentrations of the order of one mg/L.

We found also that a single unit operation of electrodialysis alone in mild alkaline conditions can improve the organoleptic properties of either wine lees spirit or wine spirits. Herein we call "wine lees spirit" an alcoholic beverage that is produced by the distillation of wine lees. Very often, the quality of the wine lees is so bad, that the wine lees spirit comes with important concentration of off-flavours, with subsequent losses of quality and economic value.

With wine lees spirit or wine spirits, it is not necessary to use the nanofiltration, because most of the chemical compounds contained in those beverages are of low molecular weight, and almost no compound would be retained by the NF membrane. These beverages, raw or diluted, are therefore only processed by ED in mild alkaline conditions, following the same procedures described before. Herein, this ED process is called: mild alkaline ED process. In this work, we only achieved the identification of some compounds that are removed from the wine lees spirit and wine spirit, but the qualitative tasting of it, revealed that the organoleptic properties of the treated beverages are substantially improved and, by consequence, the economic value of these beverages increase after the treatment.
The compounds we formally identified in this work, that contribute to harmful aroma notes in the wine lees spirit, and which concentration was reduced by the ED in mild alkaline conditions were: ethyl acetate (reduction of 31.0%), 1-octen-3-ol (reduction of 21.6%), 2,4,6-trichloroanisole (reduction of 26.1%), 4-ethylphenol (reduction of 100%), 4-ethylguaiacol (reduction of 100%) and styrene (reduction of 20.8%).
It is clear, of course, that the organoleptic improvement of the wine lees spirit was due to the reduction of concentration of many other bad-aroma molecules, but in this study, we achieve the identification of the above-mentioned, which are also mentioned in the example 4.

The integrated mild alkaline NF/ED process with a single or two ED stages, considered as a black box, can be operated, in a preferred embodiment, with wine contained in a single wine tank, in batch mode. In this embodiment, the wine is collected in an intermediate position of wine tank and fed to the NF equipment. The wine concentrate that comes out from the NF equipment is recirculated back to the wine tank, being discharged in the bottom of this wine tank. The purified NF permeate that comes out from the mild alkaline NF/ED process is discharged in the top of the wine tank. In the outlet extremity of the returning tube of purified NF permeate, a diffuser is placed to minimize the discharge velocity and the turbulence, to create hydrodynamic conditions that minimize the mixing of the NF permeate with the concentrated wine in the bottom of the tank. If the volume of the tank is sufficiently large, typically with a volume larger than 1000 L, the purified NF permeate that recirculates to the wine tank does not mix too much with the concentrated wine in these conditions. In fact, the turbulence caused by the stream of returning concentrated wine is confined to the bottom of the wine tank and the permeate fluctuates on the top, because its density is lower than the one of the concentrated wine. This mode of batch operation of the integrated mild alkaline NF/ED process requires less intervention of the operator, because the purified permeate can be stored in the wine tank and there is no need to use an additional permeate tank. At the same time, the operation is more efficient, because there is no substantial dilution of the off-flavour compounds in the wine concentrate. In these conditions, the concentration of the off-flavour compounds in the concentrated wine is kept high during the treatment and the NF/ED process is faster.

### Brief Description of the Drawings

Without intent to limit the disclosure herein, this application presents attached drawings of illustrated embodiments for an easier understanding. It is emphasized that the various features of the drawing are not to scale. On the contrary, the dimensions of the various features are arbitrarily expanded or reduced for clarity. Included in the drawing are the following figures:
FIG. 1 illustrates a frontal cross section of a first embodiment of the wine or beverage diffuser 170.
FIG. 2 illustrates a frontal cross section of a second embodiment of the wine or beverage diffuser 170.

### Detailed Description

For sake of clarity, all the NF/ED processes described herein are performed in batch mode, in sequence, running only one operation at a time, except where it is explicitly said otherwise. The different liquid solutions processed in one operation are then processed in the next operation, until the final treated wine is reconstituted. However, as well known to those skilled in the art, the same processes can operate in continuous, feed-and-bleed or semi-continuous modes too, for the sake of increasing the overall process efficiency.

The present application is first directed to an improvement of the classic NF/ED process (Cameira-dos-Santos and Geraldes-Fernandes, 2013), which makes possible to remove unwanted amounts of 4-EP and 4-EG from beverages and in particular from wine. The raw wine is first processed by NF to obtain a NF permeate and a concentrated wine, using NF membranes with a cut-off, between 100 and 1000 g/mol, but preferentially between 100 and 300 g/mol, and with transmembrane pressures between 10 bar and 100 bar, but preferentially between 20 and 60 bar. The nanofiltration recovery rate (NFRR), defined as the ratio between the volume of NF permeate produced by the initial volume of raw wine, is an important variable of the process. As the removal of 4-EP and 4-EG is proportional to the NFRR, this parameter must be set according to the desired fraction of the 4-EP and 4-EG that the user wants to remove. If the concentration of 4-EP and 4-EG are very high, it may be necessary to perform diafiltration, by adding back to the wine, in the final concentration stage, part of the NF permeate purified by ED. With a wine with strong Brett character, the NFRR is typically higher than 50% and one or two diafiltration cycles must be performed with the wine concentrate. The NFRR may reach more than 80% if the wine or beverage does foul the membrane intensely. During the NF process, the wine may be cooled to better preserve the aromas.

The NF permeate, containing 4-EP and 4-EG, is subsequently processed by electrodialysis in mild alkaline conditions, with the pH, preferentially, adjusted to a value between 9 and 12, using an alkaline substance of food grade, such as potassium or sodium hydroxide, or using bipolar electrodialysis. The operating temperature can be set to a value in the range between 0°C and the maximum temperature supported by the ED membranes, which is typically around 40°C. During the electrodialysis process, the pH of the NF permeate is maintained in alkaline conditions until the concentration of 4-EP and 4-EG decrease to acceptable concentration levels. In the concentrate side of the ED stack circulates a solution with sufficient volume to receive the substances that are removed from the NF permeate. This ED concentrate solution may be acidified to prevent the precipitation of insoluble salts such as calcium carbonate or potassium bitartrate.

Together with an alkaline substance addition, a food grade salt may also be added to the NF permeate to maintain the conductivity at 25°C of the NF permeate above 100 microsiemen/cm, to minimize heat dissipation in the ED membrane stack. The addition of the alkaline substance should be made, preferentially, just before the ED stack to keep the whole amount of NF permeate in more mild alkaline conditions. This mode of operation is particularly important if the maximum pH of the NF permeate inside the ED membrane stack is 12 +/- 0.5. Typically, more than 80% of 4-EP and 4-EG can be removed from the permeate, if the ED is operated during sufficient time. In the last stage of the batch ED process, the excess of alkaline substance must be removed from the NF permeate after switching off the addition of alkaline substance and salt. Typically, the final conductivity at 25^{a}C of the NF permeate should be lower than 100 microsiemen/cm and, preferentially, close to 50 microsiemen/cm. The electrodialysis running time with an electric potential of 1.5 volt/cell, using a typical ED stack with low resistance homogeneous membranes, must be, typically, in the range between 0.5 and 10 minutes times the number of litres of beverage treated divided by the effective area of ED membrane pairs. For example, with 30 m² of ED membrane pairs, the time required to treat 1000 L of permeate is between 16 min and 333 min, depending on the type of wine treated.
In another embodiment, the same mild alkaline NF/ED process described in the last paragraph can also be used to remove very weak acidic compounds with low molecular weight that confer phenolic or vegetal off-flavors to wine or other beverages.

According to another embodiment, the mild alkaline NF/ED process, or even the classic NF/ED process, is performed with two electrodialysis stages. The raw NF permeate is first processed by an ED stack to transfer the ionized compounds to an already purified NF permeate that circulates in the concentrate compartments. In this mode of operation, an independent circuit of electrode cleaning solution is required, for obvious reasons. With this first ED stage, inorganic ions and ionized organic acids are transferred back to the stream purified NF permeate. The first ED stage is operated with the typical ED operating conditions recommended for an ED stack. The raw NF permeate, for the particular case of wine, is processed, preferentially, until the conductivity at 25°C becomes less than 200 microsiemen/cm. The second ED stage is operated in the same way of the mild alkaline ED process. The second ED stage processes the NF permeate that was treated in the first ED stage. After this step, the purified NF permeate is then used in the first ED stage to circulate in the concentrate side of the first ED stack. The purified NF permeate enriched with recovered organic acids and inorganic ions is then added back to the concentrated wine.

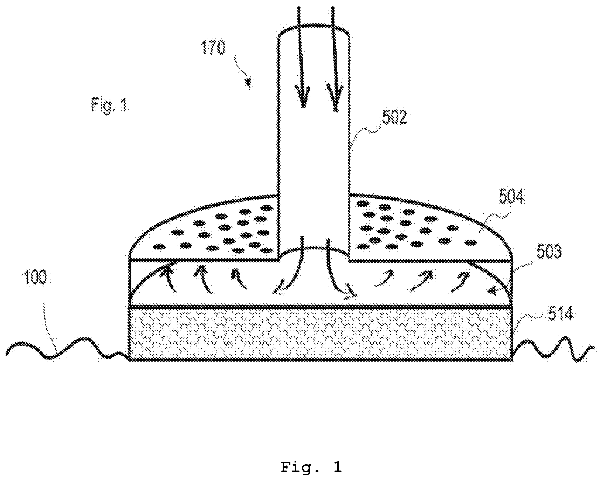

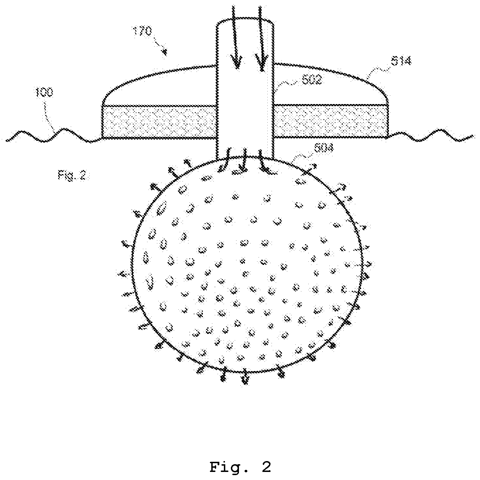

As described previously, the batch operation of the integrated mild alkaline NF/ED process, regarded as a black box, can be simplified by returning the purified NF permeate to the top of the wine tank. To minimize the mixing of the purified NF permeate with the concentrated wine, a diffuser should be placed in the discharging point of the purified NF permeate tube. Two different embodiments of the purified NF permeate diffuser **170** are depicted in **Fig. 1** and **2****.** In the embodiment of **Fig. 1****,** the purified NF permeate enters through the tube **502** and reaches the expansion chamber **503.** From this chamber the purified NF permeate is discharged at low velocity and low turbulence through the perforated plate **504.** To maintain the purified NF permeate diffuser above the concentrated wine surface **100** in the tank, a fluctuating part **514** with low density is placed below the expansion chamber **503.** In the purified NF permeate diffuser embodiment of **Fig. 2****,** the purified NF permeate is discharged to the tank through a perforated spherical wall **504** and the fluctuating part **514** is place above this wall. Instead of a perforated wall, other permeable materials, such a supported tissue or a rigid mesh, may be used.

In another embodiment, the ED process alone in mild alkaline conditions can improve the organoleptic properties of either wine spirits or wine lees spirits. The operating conditions are the same used in the ED step of the mild alkaline NF/ED process with a single ED stage.
Some of the principles behind the present disclosure are further illustrated in the examples described more ahead. The equipment and materials used in these experiments were the following. The nanofiltration equipment consisted of a feed tank with a volume of 180 L, a positive displacement pump with a maximum flow rate of 8000 L/h, and 7 membrane filtration housings is series, containing a maximum number of 7 sanitary spiral wound modules with a 9.65 cm (3.8 inch) diameter and feed channels with 0.79 mm thickness, each module having a membrane area of 8 m². The membrane filtration unit had a retention volume of 90 L and had a heat exchanger before the membrane filtration housings, which could be connected to refrigerating water. The ED equipment was sub-contracted to the company Emestab, Lda, Lisbon, Portugal, and was manufactured by Eurodia SA, Pertuis, France. The ED equipment had two ED stacks, model SV-10, which had a total effective area of 30 m² of pairs of homogeneous ion exchange membranes. The ED equipment had a feed tank and a diluate tank, and the volume of permeate retained in the stacks and in these two tanks was about 150 L. The concentrate and electrode cleaning streams were connected both to a tank with a volume of about 50 L, having a make-up water flow rate of 1200 L/h. The water was acidified with nitric acid to avoid precipitation of insoluble salts in the concentrate. The NF permeate stored in a permeate tank was fed to the ED feed tank with a flow rate of 2500 L/h. The NF permeate then flowed in a single pass through the ED stacks, with a flow rate of 2500 L/h. From the diluate tank, the NF permeate returned back to the permeate tank. The ED was performed always with 1.3 Volt/membrane pair, at 27 °C +/- 5°C. The pH of the NF permeate was adjusted with KOH of food grade. The ED and NF membranes were cleaned after the experiments, according to recommended protocols of the membrane manufacturers.

### Example 1

This example demonstrates that the mild alkaline NF/ED process, with the pH of the NF permeate adjusted to 12, removes 4-EP and 4-EG from red wine. A volume of 900 L red wine with Brett off-flavour was used. The nanofiltration was performed using seven membrane element NFS, supplied by Synder Filtration, Vacaville, USA, with a 9.65 cm (3.8 inch) diameter and feed channels with 0.79 mm thickness. This Nanofiltration membrane has a nominal cut-off between 100 and 250 g/mol and nominal NaC1 rejection between 50 and 55%. The nanofiltration of the wine was performed with an average transmembrane pressure of 40 bar during one hour. The temperature of the wine increased from 12°C to 18°C during the test. A volume of 770 L of NF permeate was obtained, corresponding to a NFRR of 85%.

The pH of the NF permeate was adjusted afterwards to 12.0 with addition of food grade potassium hydroxide. This NF permeate was then processed by ED during two hours until the final conductivity at 25°C of the NF permeate decreased to 75 microsiemen/cm and the pH decreased to 4.5. The electric current density decreased from 12 A in the beginning of the process to 2 A in the end, due to the reduction of the conductivity of the NF permeate. In the end, the purified NF permeate was mixed with the wine concentrate to obtain the final treated wine.

The analysis of some chemical parameters of the wine samples before and after the treatment is shown in Table 1. Both the concentration of 4-EP and 4-EG decreases substantially after treatment, but the reduction is greater for the 4-EP. This result may be explained by the fact that the 4-EP, with a molecular weight (MW) of 122 g/mol is smaller than the 4-EG, with a MW of 152 g/mol. The 4-EP, being smaller, permeates more easily through the NF membrane and, in the end, more 4-EP is removed by the electrodialysis than 4-EG. As expected, another positive outcome of the treatment is that it reduces strongly the volatile acidity of the wine. The downside of the treatment is that the fixed acidity of the wine is strongly reduced. This downside can be mitigated by two methods. The simpler method consists on the addition of exogenous tartaric acid or other organic acids to the reconstituted wine to compensate the organic acids that were lost in the ED process. This addition of exogenous organic acids to wine, within some limits, is allowed in most countries, including UE countries, as an authorized oenological practice. We have tried this compensation method, using tartaric acid, with beneficed impact on the organoleptic properties of the treated wine. A more elaborated method to mitigate the problem of reduction of the fixed acidity is the introduction of a second ED stage that recovers the organic acids and other ions from the raw NF permeate, according to the method outlined in the detailed description. We did not test this last method directly, but we could confirm in a subsequent test that the ED of the raw NF permeate reduced the conductivity of the NF permeate without removing the Brett off-flavour. This result, thus, proves that the ED can recover selectively the organic acids and other ions of the wine that are in the NF raw permeate, if the pH of the raw NF permeate is not increased (that is, the pH of the raw NF permeate is similar to the pH of the wine).

**Table 1 - Composition of red wine before and after the treatment with a NFRR of 85% and NF permeate's pH of 12.0 in Example 1.**

| **Parameter** | **Unit** | **Untreated wine** | **Treated wine** | **% of reduction** |
|---|---|---|---|---|
| 4-ethyl phenol | (µg/L) | 3335 | 787 | -76.4% |
| 4-ethyl guaiacol | (µg/L) | 548 | 145 | -73.5% |
| Fixed acidity | (g tartaric acid/L) | 4.87 | 2.51 | -48.5% |
| Volatile acidity | (g acetic acid/L) | 1.00 | 0.24 | -76.0% |
| Ethanol | (% vol/vol) | 12.3 | 11.0 | -10.6% |
| Total SO₂ | (mg/L) | 131 | 103 | -21.4% |

The concentrations of ethanol and total SO₂ decreased slightly after the treatment. The loss of ethanol was caused by a dilution effect resulting from the method that was used to remove the concentrated wine from the NF equipment. Tap water was pumped through the NF equipment to displace the retention volume of concentrated wine, and some mixing occurred between the wine and the tap water. In later experiments we used nitrogen to displace the concentrated wine and the concentration of ethanol during the treatment decreased less than 0.3% vol/vol. The reduction of total SO₂ was caused also by the tap water mixing effect, but, probably, also by the contact of the wine with air during the treatment. We used nitrogen to make the atmosphere of the vessels inert, but due to the low volume of wine treated, some exposure of the wine to the air, in the beginning and ending of the NF/ED process, was inevitable.

### Example 2

This example demonstrates that the mild alkaline NF/ED process, with the pH of the NF permeate maintained at 11 during the ED process, removes 4-EP and 4-EG from red wine. A volume of 700 L red wine with Brett off-flavour was used. The nanofiltration was performed using only two membrane elements NFX, supplied by Synder Filtration, Vacaville, USA, with a 3.8" diameter and feed channels with 0.79 mm thickness. This Nanofiltration membrane has a nominal cut-off between 150 and 300 g/mol and a nominal NaCl rejection of 40%. The nanofiltration of the wine was performed with an average transmembrane pressure of 40 bar during 2.5 hours. The temperature of the wine increased from 11°C to 22°C during the test. A volume of 470 L of NF permeate was obtained, corresponding to a NFRR of 67%. The ED of the NF permeate was performed first during 2 h with continuous addition of potassium hydroxide to maintain the pH at 11.0 +/-0.5. In the last part of the ED process, during 30 min, the addition of potassium hydroxide was stopped and the ED continued, until the conductivity at 25°C of the NF permeate reached 75 microsiemen/cm. In the end, the purified permeate was mixed with the wine concentrate to obtain the final treated wine. The chemical analysis of wine samples before and after the treatment is shown in Table 2.

**Table 2 - Composition of red wine before and after treatment with a NFRR of 67% and NF permeate's pH of 11.0 in Example 2.**

| **Parameter** | **Unit** | **Untreated wine** | **Treated wine** | **% of reduction** |
|---|---|---|---|---|
| 4-ethyl phenol | (µg/L) | 1229 | 616 | -49.8% |
| 4-ethyl guaiacol | (µg/L) | 274 | 188 | -31.0% |
| Fixed acidity | (g tartaric acid/L) | 4.99 | 3.21 | -35.6% |
| Volatile acidity | (g acetic acid/L) | 0.57 | 0.14 | -75.4% |
| Ethanol | (% vol/vol) | 13.5 | 11.5 | -14.8% |
| Total SO₂ | (mg/L) | 80 | 60 | -25.0% |

### Example 3

This example demonstrates that the mild alkaline NF/ED process, with the pH of the NF maintained at 11 during the ED process, improves the organoleptic properties of non-alcoholic wine. A volume of 1000 L of dealcoholized white wine was used. This dealcoholized white wine was obtained by vacuum distillation of white wine, using a spinning cone column distillation. This dealcoholized wine had vegetal off-flavours that remember cooked potato or cabbage.

The nanofiltration of the dealcoholized white wine was performed using seven membrane element NFS, supplied by Synder Filtration, Vacaville, USA, which were already described in Example 1. The nanofiltration of the dealcoholized white wine was performed initially at an average transmembrane pressure of 20 bar and was increased during the test until reaching 30 bar in the end of the test, to keep the permeate flow rate constant. The temperature of the wine increased from 10°C to 20°C during the test. A volume of 900 L of NF permeate was obtained after one hour of operation. This volume corresponds to a NFRR of 90%.

The ED of the NF permeate was performed first during 45 min with continuous addition of potassium hydroxide to maintain the pH at 11.0 +/-0.5. In last part of the ED process, during 15 min, the addition of potassium hydroxide was stopped and the ED continued until the NF permeate's conductivity at 25°C reached 75 microsiemen/cm. In the end, the purified permeate was mixed with the concentrate of dealcoholized white wine to obtain the final treated dealcoholized white wine.

Samples of the dealcoholized wine, before and after the NF-ED process described above, were collected and analyzed to determine the concentration of carbon disulfide, methyl mercaptan, ethyl mercaptan, ethyl methyl disulfide, dimethyl sulfide, diethyl sulfide, dimethyl disuifide, diethyl disulfide, dimethyl trisulfide, benzothiazole and ditert butyl disulfide. These target compounds were selected because the observed vegetal off-flavor are typically associated with some of those compounds. Nonetheless, the analysis has shown that none of these compounds were present in both samples in concentrations higher than 1 µg/L. Despite of the absence of these compounds in the wine, a qualitative wine tasting of the dealcoholized wine, by a tasting panel that integrates 3 trained wine tasters, and other three persons, revealed that the organoleptic properties of the treated dealcoholized wine had improved, and the original vegetal off-flavours, which remembered cooked potato or cabbage, had disappeared. Excluding the fact that the cooked potato odour and the cabbage odour were vanished, the above mentioned tasting panel observed that the remaining organoleptic properties of the wine were almost unchanged after the treatment. Whatever chemical compounds responsible for the off-flavour were, the mild alkaline NF/ED process removed them.

### Example 4

This example demonstrates that the ED process alone, in mild alkaline conditions, improves the organoleptic properties of diluted wine lees spirit. Three experiments, called A, B and C, were performed with diluted wine lees spirit, with an alcoholic concentration of 25% (v/v). The raw wine lees spirit with an ethanol concentration of 77% (v/v) was diluted to 25% (v/v) for safety reasons. A batch of wine lees spirit with particularly strong off-flavors was selected for these experiments. We performed three experiments with the parameters described in Table 3. The quality of the different samples of the diluted wine lees spirit was evaluated by a tasting panel constituted by the eight persons. All the members of this panel were unanimous in the classification of the quality of the different samples. The best improvement of the organoleptic properties of the wine lees spirit was obtained with the operating conditions of the experiment B. In this experiment B, the pH of the diluted wine lees spirit was maintained at pH=11 +/- 0.5 in the feed tank of the ED equipment, by the continuous manual addition of KOH concentrated solution, during 20 min. After that time, the addition of KOH was stopped and during 10 min the conductivity at 25°C decreased to 75 microsiemen/cm.

The increase of the initial pH of the diluted wine lees spirit to pH=12, in the experiment A results, in an organoleptic tasting evaluation, as follows: the wine lees spirit treated in the experiment A, was worse than the one treated in the experiment B. This result suggests that some aromatic compounds are being decomposed at pH 12.

The experiment C of Table 3 shows the worst improvement on the quality of the diluted wine lees spirit. One of the reasons for that bad performance was the low value of the parameter defined by the running time x ED membrane area/volume achieved in the experiment C. This means that the running time per unit of treated volume of diluted wine lees spirit was too low. The treatment produced good results only when the running time x ED membrane area/volume achieved in the experiment was much higher than 2.2. At the same time, the results show that, in a preferred embodiment, it is advisable to keep the pH of the treated solution in mild alkaline conditions most of the time, through the continuous addition of an alkaline substance, such as was made in experiment B.

**Table 3 - Tasting evaluation of wine lees spirit for different operating conditions for three different experiments.**

| **Experiment code** | **Volume (L)** | **pH** | **Running time (minutes)** | **Running time x ED area/volume (minutes x m²/L)** | **Organoleptic Evaluation** |
|---|---|---|---|---|---|
| A | 150^{d} | 12^{a} | 30 | 6.0 | Very good |
| B | 150^{d} | 11^{b} | 30 | 6.0 | Excellent |
| C | 2500 | 11^{c} | 180 | 2.2 | Good |

| | | | | | |
|---|---|---|---|---|---|
| ^{a} The pH of diluted wine lees spirit was adjusted to 12, and then decreased along with the running time of electrodialysis. ^{b} The pH of diluted wine lees spirit was kept at 11 during 20 min, and then decreased along with the running time of electrodialysis. ^{c} The pH of diluted wine lees spirit was adjusted to 11, and then decreased along with the running time of electrodialysis. ^{d} In this case all the volume of diluted wine lees spirit was inside the ED equipment and recirculated between the feed and the diluate tanks. | | | | | |

The analysis of some chemical compounds in the samples of the diluted wine lees spirits, before and after the mild alkaline ED process are displayed in Table 4. These compounds were selected because they are involved in well known off-flavours. As expected, all the 4-EP and 4-EG were removed from the dilute wine lees spirits. Some of the ethyl acetate was removed, because it is partially hydrolyzed at pH 11 (to produce acetic acid and ethanol), the acetic acid is then removed by the ED process. The mild alkaline ED process is also capable of removing substantial amounts of 1-octen-3-ol, 2,4,6-trichloroanisole and styrene, in the operating conditions of experiment B. This is a surprising result because these are neutral compounds that remain neutral in mild pH conditions. The improvement of the organoleptic properties of the dilute wine lees spirit are explained by these results, in particular by the removal of the molecules shown in Table 4.

**Table 4 - Composition of diluted wine lees spirit (DWLS) before and after the experiment B of Table 3.**

| **Parameter** | **Unit** | **Untreated DWLS** | **Treated DWLS** | **% of reduction** |
|---|---|---|---|---|
| ethyl acetate | (mg/L) | 432 | 298 | -31.0% |
| 1-octen-3-ol | (µg/L) | 51 | 40 | -21.6% |
| 2,4,6-trichloroanisole | (ng/L) | 4.6 | 3.4 | -26.1% |
| 4-ethyl-phenol | (µg/L) | 493 | n.d. | -100% |
| 4-ethylguaiacol | (µg/L) | 19 | n.d. | -100% |
| Styrene | (µg/L) | 4.8 | 3.8 | -20.8% |

| | | | | |
|---|---|---|---|---|
| n.d. below detection limit | | | | |

### References

Anness B. J. and Bamforth C. W. (1982). Dimethyl sulphides-A review. J. Inst. Brew., 88, 244-252.
Bayonove C., Baumes R., Crouzet J., and Gunata Z. (2000). Aromas. In Enologia: Fundamentos cientificos y tecnologicos. C. Flanzy (Ed.), pp. 137-176. Madrid Vicente Ediciones, Madrid.
Bes M., Carrère H., Souchon I., Bonnaire N., Marin M. and Escudier J.L. (2001). Adsorption de composes d'aromes sur polymères pour la valorisation d'un effluent vinicole. In Recents progrès en genie des procédés. 8e Congrès Français de Genie des Procédés. Institut National de la Recherche Agronomique 15(81):249-255.
Cameira-dos-Santos P.J. and Geraldes-Fernandes V.M. (2013). Método para a redução da acidez e da acidez volatil em vinhos e outras bebidas, fermentadas ou não. Patente de Invenção Nacional n° PT 105008. Boletim da Propriedade Industrial, n° 054/2013 - 2013/03/19. Instituto Nacional da Propriedade Industrial, Portugal.
Chatonnet P., Dubourdieu D., Boidron J.N. and Pons M., (1992). The origin of ethylphenol in wines. J. Sci. Food Agric.,60, 165-178.
Couto J.A., Neves F., Campos F., and Hogg T. (2005). Thermal inactivation of the winespoilage yeasts Dekkera/Brettanomyces. International Journal of Food Microbiology, 104(3): 337-344.
De Mora S. J., Eschenbruch R., Knowles S. J. and Spedding, D.J. (1986). The formation of dimethyl sulphide during fermentation using a wine yeast. Food Microbiol. 3: 27-32.
Etievant P.X. (1991). Wine. In Volatile Compounds in Foods and Beverages; Maarse, H., Ed.; Dekker: New York, pp 447478.
Gerbaux V. and Vincent B. (2001). Influence des phenols volatils sur les qualités sensorielles de vins rouges de différents cépages. Rev. Oenol., 99: 15-18.
Jensen M., Lydehoj Hansen L. and Andersen, H. (2002). Transfer of the meat aroma precursors (dimethyl sulfide, dimethyl disulfide and dimethyl trisulfide) from feed to cooked pork. Lebensm. Wiss. Technol., 35: 485-489.
Laidler K.J. and Chen D. (1958). The influence of pressure on the kinetics of the alkaline hydrolysis of esters and amides. Trans. Faraday Soc. 54: 1026-1033.
Segurel M.A., Razungles A.J., Riou, C. Salles M., and Baumes R.L. (2004). Contribution of Dimethyl Sulfide to the Aroma of Syrah and Grenache Noir Wines and Estimation of Its Potential in Grapes of These Varieties, J. Agric. Food Chem., 52: 7084-7093.
Shaw P., Ammons J. and Braman R. (1980). Volatile sulfur compounds in fresh orange and grapefruit juices: identification, quantitation and possible importance to juice flavor. J. Agric. Food Chem. 28: 778-781.
Smith C. (1994). Apparatus and method for removing compounds from a solution. US patent, Appl. N° 218 920, Patent number: 5 480 665.
Ugarte P., Agosin E., Bordeu E. and Villalobos J.I. (2005). Reduction of 4-ethylphenol and 4-ethylguaiacol concentration in red wines using reverse osmosis and adsorption. Am. J. Enol. Vitic. 56 (1):30-36.

## Claims

1. A method to remove unwanted very weak acidic compounds, which include in particular 4-ethylphenol and 4-ethylguaiacol, from a beverage, wherein the beverage is first processed by nanofiltration to obtain a raw nanofiltration permeate and a beverage concentrate, then the nanofiltration permeate is processed by electrodialysis to obtain a purified nanofiltration permeate, and finally the purified nanofiltration permeate is mixed with the beverage concentrate to obtain the treated beverage, comprising:
adjusting the pH of the nanofiltration permeate to a value higher than 10.5 by the addition of a food grade alkaline substance and running the electrodialysis until the conductivity at 25°C of the permeate is lower than 100 microsiemen/cm.

2. The method according to the previous claim, wherein the pH of the nanofiltration permeate is adjusted to a value between 10.5 and 12.5.

3. The method according to claim 1, wherein the addition of food grade alkaline substance to the nanofiltration permeate is performed by keeping the pH of the nanofiltration permeate constant during sufficient time to remove the unwanted very weak acidic compounds.

4. The method according to claim 1, wherein the addition of food grade alkaline substance to the nanofiltration permeate is done just before the electrodialysis stack, to keep the nanofiltration permeate in more mild alkaline conditions.

5. The method according to claim 1, wherein the electrodialysis process has two stages, wherein the first electrodialysis stage recovers organic acids and other ions of the raw nanofiltration permeate and transfers them to the purified nanofiltration permeate that was produced in the second stage and that circulates on the concentrate compartment of the first electrodialysis stage; wherein the second electrodialysis stage is operated according to the pH defined in claims 1 to 4.

6. The method according to claims 1 to 5 wherein the beverage is wine.

7. The method according to claims 1 to 5 wherein the beverage is dealcoholized wine.

8. The method according to claims 1 to 7, wherein the method is performed in batch mode using a beverage feed tank; the nanofiltration apparatus receives the beverage from the intermediate region of the beverage feed tank and the concentrated beverage is recirculated to the bottom of the beverage tank; the purified permeate processed by electrodialysis is recirculated to the top of the beverage feed tank using a diffuser 170 to reduce the discharging velocity and turbulence of the purified nanofiltration permeate, to prevent the mixing of the purified nanofiltration permeate with the concentrated beverage in the feed tank.

## Patentansprüche

1. Eine Methode zur Entfernung von unerwünschten, sehr schwachen säurehaltigen Verbindungen - welche insbesondere 4-Äthylphenol und 4-Ethylguajacol beinhalten - aus einem Getränk, wobei das Getränk als erstes durch Nanofiltration behandelt wird, um ein rohes Nanofiltrationspermeat und ein Getränkekonzentrat zu erhalten, danach wird das Nanofiltrationspermeat durch Elektrodialyse behandelt, um ein gereinigtes Nanofiltrationspermeat zu erhalten und schließlich wird das gereinigte Nanofiltrationspermeat mit dem Getränkekonzentrat vermischt, um das behandeltes Getränk zu erhalten, bestehend aus: Dem Einstellen des pH-Werts des Nanofiltrationspermeats auf einen Wert von mehr als 10,5 durch die Zugabe einer lebensmittelverträglichen alkalischen Substanz und der Durchführung der Elektrodialyse, bis die Leitfähigkeit des Permeats bei 25°C weniger als 100 Mikrosiemens/cm beträgt.

2. Die Methode gemäß dem vorherigen Anspruch, wobei der pH-Wert des Nanofiltrationspermeats auf einen Wert zwischen 10,5 und 12,5 eingestellt wird.

3. Die Methode gemäß Anspruch 1, wobei die Zugabe der lebensmittelverträglichen alkalischen Substanz zum Nanofiltrationspermeat mittels der Einhaltung eines konstanten pH-Werts des Nanofiltrationspermeats und während einer ausreichenden Zeit durchgeführt wird, um die unerwünschten, sehr schwachen säurehaltigen Verbindungen zu entfernen.

4. Die Methode gemäß Anspruch 1, wobei die Zugabe der lebensmittelverträglichen alkalischen Substanz zum Nanofiltrationspermeat kurz vor der Elektrodialyse durchgeführt wird, um mildere alkalische Bedingungen des Nanofiltrationspermeats zu gewährleisten.

5. Die Methode gemäß Anspruch 1, wobei das Elektrodialyseverfahren aus zwei Stufen besteht, wobei die erste Elektrodialysestufe die organischen Säuren und weitere Ionen aus dem rohen Nanofiltrationspermeat zurückgewinnt und sie auf das gereinigte Nanofiltrationspermeat überträgt, welches in der zweiten Stufe produziert wurde und im Konzentrat-Abteil der ersten Elektrodialysestufe zirkuliert; wobei die zweite Elektrodialysestufe in Übereinstimmung mit den in den Ansprüchen 1 bis 4 bestimmtem pH-Werten betrieben wird.

6. Die Methode gemäß den Ansprüchen 1 bis 5, wobei das Getränk aus Wein besteht.

7. Die Methode gemäß den Ansprüchen 1 bis 5, wobei das Getränk aus entalkoholisiertem Wein besteht.

8. Die Methode gemäß den Ansprüchen 1 bis 7, wobei die Methode im Batch-Betrieb unter Verwendung eines Speisetanks des Getränks durchgeführt wird; die Nanofiltrationsanlage erhält das Getränk aus dem Zwischenbereich des Getränke-Speisetanks und das konzentrierte Getränk wird zum Boden des Getränketanks zurückgeführt; das durch den Elektrolyseprozess gereinigte Permeat wird zum Oberteil des Getränke-Speisetanks unter Verwendung eines 170 Diffusers geleitet, um die Austrittsgeschwindigkeit und die Turbulenz des gereinigten Nanofiltrationspermeats zu reduzieren und das Vermischen des gereinigten Nanofiltrationspermeats mit dem konzentrierten Getränk im Speisetank zu verhindern.

## Revendications

1. Procédé pour éliminer des composés acides très faibles indésirables, lesquels comprennent en particulier du 4-éthylphénol et du 4-éthylguaiacol, d'une boisson, dans lequel la boisson est d'abord traitée par nanofiltration pour obtenir un perméat de nanofiltration brut et un concentré de boisson, puis le perméat de nanofiltration est traité par électrodialyse pour obtenir un perméat de nanofiltration purifié, et finalement, le perméat de nanofiltration purifié est mélangé avec le concentré de boisson pour obtenir la boisson traitée, comprenant :
l'ajustement du pH du perméat de nanofiltration à une valeur supérieure à 10,5 par l'addition d'un substance alcaline de qualité alimentaire et durant l'électrodialyse jusqu'à ce que la conductivité à 25°C du perméat soit inférieure à 100 microsiemens/cm.

2. Procédé selon la revendication précédente, dans lequel le pH du perméat de nanofiltration est ajusté à une valeur comprise entre 10,5 et 12,5.

3. Procédé selon la revendication 1, dans lequel l'addition de substance alcaline de qualité alimentaire au perméat de nanofiltration est réalisée par le maintien du pH du perméat de nanofiltration constant durant un temps suffisant pour éliminer les composés acides très faibles indésirables.

4. Procédé selon la revendication 1, dans lequel l'addition de substance alcaline de qualité alimentaire au perméat de nanofiltration est effectuée juste avant l'empilement d'électrodialyse, afin de maintenir le perméat de nanofiltration dans des conditions alcalines plus douces.

5. Procédé selon la revendication 1, dans lequel le procédé d'électrodialyse a deux étapes, dans lesquelles la première étape d'électrodialyse récupère des acides organiques et d'autres ions du perméat de nanofiltration brut et les transfère au perméat de nanofiltration purifié qui a été produit dans la seconde étape et qui circule sur le compartiment de concentré de la première étape d'électrodialyse ; dans laquelle la seconde étape d'électrodialyse est exécutée en fonction du pH défini selon l'une quelconque des revendications 1 à 4.

6. Procédé selon l'une quelconque des revendications 1 à 5, dans lequel la boisson est du vin.

7. Procédé selon l'une quelconque des revendications 1 à 5, dans lequel la boisson est du vin désalcoolisé.

8. Procédé selon la revendication 1, dans lequel le procédé est exécuté en mode discontinu à l'aide d'un réservoir d'alimentation en boisson ; l'appareil de nanofiltration reçoit la boisson de la région intermédiaire du réservoir d'alimentation en boisson et la boisson concentrée est recyclée vers le fond du réservoir de boisson ; le perméat purifié traité par électrodialyse est recyclé vers le sommet du réservoir d'alimentation en boisson à l'aide d'un diffuseur 170 afin de réduire la vitesse d'écoulement et la turbulence du perméat de nanofiltration purifié, afin d'empêcher le mélange du perméat de nanofiltration purifié avec la boisson concentrée dans le réservoir d'alimentation.
